# EUROPÄISCHE PATENTSCHRIFT

(11) **EP 1 181 172 B1**
(45) Veröffentlichungstag und Bekanntmachung des Hinweises auf die Patenterteilung: **22.10.2003**
(21) Anmeldenummer: 00945604.7
(22) Anmeldetag: 02.06.2000
(51) Int. Cl.: B60R 21/20

(54) **LENKRAD**
STEERING WHEEL
VOLANT DE DIRECTION

(30) Priorität: 04.06.1999 DE 19927032
(43) Veröffentlichungstag der Anmeldung: 27.02.2002
(73) Patentinhaber: Takata-Petri AG, 63743 Aschaffenburg (DE)
(72) Erfinder: SAUER, Frank, D-63843 Niedernberg (DE); HANS, Andreas, D-63843 Niedernberg (DE)
(74) Vertreter: Baumgärtel, Gunnar, Dr.
(86) Internationale Anmeldenummer: DE0001855
(87) Internationale Veröffentlichungsnummer: WO00074980

(56) Entgegenhaltungen:
- DE-A- 19 503 816
- DE-C- 19 725 684
- GB-A- 2 336 135
- US-A- 5 350 190
- US-A- 5 380 037

## Beschreibung

Die Erfindung betrifft ein Lenkrad mit einem Rastelement zur Verrastung eines Airbagmoduls mit dem Lenkradkörper und elektrischem Kontakt nach dem Oberbegriff des Anspruchs 1.

Airbageinheiten dienen dem Schutz eines Kraftfahrzeug-Insassen und gehören inzwischen überwiegend zum Standard der Ausrüstung eines Kraftfahrzeuges. Da sich eine Montage der Airbageinheit über Schrauben als sehr aufwendig erwiesen hatte, wurden verschiedene Möglichkeiten der Befestigung über Rastverbindungen vorgeschlagen.

Die DE 296 02 630 beschreibt eine Rasteinrichtung zur Befestigung eines Gassackmoduls an einem Fahrzeugteil, wobei die Rasteinrichtung so ausgebildet ist, daß durch Andrücken und/oder Drehen des Gassackmoduls ein Verriegelungskörper in ein entsprechend geformtes Gegenstück eingreift und so das Gassackmodul an dem Fahrzeugteil arretiert. Als Verriegelungskörper ist in einem Ausführungsbeispiel ein um einen zylinderförmigen Vorsprung gewundener gebogener Federstahl vorgesehen, der in einen Haken an einem Lenkradkörper einschnappbar ist.

Die DE 296 21 295 offenbart eine Vorrichtung zur Befestigung eines Airbagmoduls im Lenkrad mit mindestens einem passiven Rastelement und einem schwenkbaren oder verschiebbaren starren Bauteil als aktivem Rastelement, von denen ein Element am Lenkrad und das andere Element am Airbagmodul vorgesehen ist. Als aktives Rastelement kommt auch ein federnd gelagerter, schwenkbarer Haken in Frage.

Die DE 195 03 816 beschreibt eine Anordnung zur Befestigung eines Airbagmoduls an einem Lenkradkörper, bei der die Halterung mittels eines in eine federnde Raste eingreifenden Riegels erfolgt. In einer Ausführungsform sind Haken an dem Airbagmodul und Schenkelfedern an dem Lenkrad vorgesehen, wobei die Haken mit einem Schenkel der Feder verrastet werden.

Die DE 197 25 684 offenbart ein Lenkrad mit einem mittels Rastverbindung an dem Lenkradkörper befestigten Airbagmodul, wobei die Rastverbindung ein federndes und sich beim Montagevorgang spannendes und beim Einrasten in die Arretierstellung zurückschnappendes Element aufweist. Dieses Element wird von einem vorgespannten Drahtring an dem Lenkrad oder der Airbageinheit gebildet, der an hakenförmigen Gestaltungen festgelegt ist. An der Airbageinheit bzw. dem Lenkrad sind den Drahtring bei der Montage entgegen seiner Vorspannung wegdrängende und in der Arretierstellung sich an dem Drahtring verhakende Gestaltungen vorgesehen.

Die gattungsgemäße US-A 5,350,190 beschreibt Verbindungselemente zwischen einem Airbagmodul und einem Lenkrad, die dem Airbagmodul eine Bewegung zum Lenkrad hin und vom Lenkrad weg ermöglichen. Die Verbindungselemente bestehen aus jeweils zwei Teilen, wobei das erste Teil mit dem Lenkrad verbunden ist und das zweite mit dem Airbagmodul. Die beiden Teile greifen teleskopartig ineinander, sind durch eine ringförmige Lippe gegen Auseinanderrutschen gesichert und können aufgrund dieser Lippe ineinander verrastet werden. Die beiden Teile sind gegeneinander vorgespannt, z.B. durch eine Feder.

Durch diese Befestigungsarten ist zwar eine vereinfachte Montage der Airbageinheit gewährleistet. Die Anordnung der Airbageinheit im Zentrum eines Lenkrades birgt aber ein weiteres Problem. Üblicherweise wird nämlich das Hornsignal, das es dem Fahrer in kritischen Situationen ermöglichen soll, ein Warnsignal abzugeben, durch einen Druck auf das Zentrum des Lenkrades des Fahrzeuges ausgelöst. Dabei wird zumindest ein Teilbereich einer Abdeckung in Richtung auf den Lenkradkörper bewegt und so ein elektrischer Schaltkontakt kurzgeschlossen.

Durch die Anordnung von Airbageinheiten im Lenkrad ergeben sich Probleme bezüglich der räumlichen Anordnung der Kontakte für die Hornauslösung. Separate Betätigungshebel, etwa kombiniert mit Schalthebeln für Licht oder Scheibenwischer, werden zwar vereinzelt verwendet, erweisen sich aber als nachteilig, da der Fahrer hieran nicht gewöhnt ist und daher zu lange Zeit benötigt, um das Hornsignal auszulösen.

Ein Lösungsansatz für dieses Problem stellt das "floating horn" Prinzip dar. Dabei wird die Airbageinheit so an dem Lenkrad angeordnet, daß durch einen von dem Fahrer ausgeübten Druck auf die Airbageinheit das Hornsignal auslösbar ist. Überwiegend wird dabei jeweils ein Kontakt an der Airbageinheit und an dem Lenkrad angeordnet und die Airbageinheit wird über flexible Bauteile mit dem Lenkrad verbunden. Dadurch können die Kontakte bei einem auf die Airbageinheit ausgeübten Druck durch eine Bewegung der Airbageinheit auf das Lenkrad zu kurzgeschlossen und so das Horn ausgelöst werden.

Üblicherweise bilden das (elektrisch leitende) Lenkradskelett oder der Generatorträger der Airbageinheit einen ersten Kontakt, und an dem jeweils anderen Teil wird ein entsprechender zweiter Kontakt vorgesehen. Vielfach wird eine zusätzliche Kontaktbrücke als Kontakt an dem Lenkrad angeordnet.

Bei allen oben beschriebenen Vorrichtungen zur Verrastung einer Airbageinheit an einem Lenkrad müssen zusätzliche Teile vorgesehen werden, wenn die Airbageinheit nach dem "floating horn" Prinzip zur Hornauslösung dienen soll.

Es ist daher wünschenswert, bei einer Airbagbefestigung nach dem "floating horn" Prinzip die Anzahl der benötigten Teile weiter zu reduzieren und dabei zugleich eine einfache, sichere und ohne Werkzeug durchführbare Festlegung der Airbageinheit an dem Lenkradkörper zu ermöglichen.

Diese Aufgabe wird durch Schaffung eines Lenkrades mit Rastelement zur Verrastung eines Airbagmoduls mit dem Lenkradkörper und elektrischem Kontakt mit den Merkmalen des Anspruchs 1 gelöst.

Bei einem Lenkrad mit einem Lenkradkörper, einer Airbageinheit, einer Rastverbindung zum Festlegen der Airbageinheit an dem Lenkradkörper, einer Kontakteinrichtung mit mindestens einem ersten und einem zweiten Kontakt, die zur Auslösung eines elektrischen Funktionselementes, insbesondere eines elektrischen Hornes, kurzgeschlossen werden, wenn die Airbageinheit durch einen auf diese ausgeübten Druck in Richtung des Lenkradkörpers bewegt wird, und bei dem der erste Kontakt ein Bestandteil eines Rastelementes der Rastverbindung ist, wird das Rastelement durch ein Drahtelement gebildet.

Hierzu ist das Drahtelement der Rastverbindung zumindest teilweise elektrisch leitend und bildet gleichzeitig einen ersten Kontakt der Kontakteinrichtung.

Bevorzugt wird hierbei die Airbageinheit an dem Lenkradskelett, eines Teils des Lenkradkörpers, festgelegt. Allgemein wird allerdings unter Lenkradkörper das gesamte Lenkrad ohne Airbageinheit verstanden.

Bevorzugt ist es, mindestens ein elastisches Distanzelement zur Einstellung eines Abstandes zwischen dem Lenkradkörper und der Airbageinheit vorzusehen, das durch Ausübung eines Druckes auf die Airbageinheit deformierbar ist, wodurch der erste und der zweite Kontakt kurzgeschlossen werden. Es ist möglich, daß die Funktionen des Rastelementes und des Distanzelementes in einem Bauteil verwirklicht werden, etwa in dem das Rastelement unter einer Vorspannung steht und auf diese Weise auch den Abstand zwischen Airbageinheit und Lenkrad einstellt sowie die Bewegung der Airbageinheit auf das Lenkrad zu ermöglicht. Vorzugsweise sind jedoch getrennte Elemente vorgesehen, wobei das Distanzelement gleichzeitig die Rastverbindung sichern kann, indem es einer weiteren als der für die Ruheposition vorgesehenen Annäherung der Airbageinheit an das Lenkrad entgegenwirkt.

Der zweite Kontakt wird vorzugsweise von mindestens einem Kontaktniet gebildet. Durch die Funktion des Rastelementes als Kontakt ist für den Kontakt kein weiteres Bauteil erforderlich. Der enge funktionelle Zusammenhang zwischen Rastelement und Kontakt vereinfacht auch die Herstellung, indem sich eine separate Positionierung von Befestigungselementen und elektrischen Kontakten erübrigt.

In einer bevorzugten Ausgestaltung erstreckt sich das Drahtelement im wesentlichen entlang des Umfangs der Airbageinheit. Das Drahtelement kann entweder an der Airbageinheit oder an dem Lenkrad festgelegt sein.

Vorzugsweise ist das Drahtelement in die Airbageinheit oder das Lenkradskelett eingebettet. Zur Ausbildung des ersten Kontaktes des Rastelementes ist in der Airbageinheit oder dem Lenkradskelett eine Aussparung vorgesehen, durch die hindurch das Rastelement zugänglich ist und mit dem zweiten Kontakt kurzgeschlossen werden kann. Durch die Einbettung wird das Drahtelementes in der Airbageinheit oder dem Lenkradskelett fixiert und ein Verschieben ist bei der Kontaktierung auch bei der Verwendung dünner und für die Verrastung besonders geeigneter elastischer Drahtelemente wirkungsvoll unterbunden. Ein Einbetten in die Airbageinheit ist in besonders einfacher Weise möglich, wenn z. B. ein Teil des Gehäuses der Airbageinheit oder der Generatorträger aus Kunststoff besteht. Dann kann das Drahtelement bei der Herstellung dieses Teils durch Spritzguß in die Spritzform eingelegt und bei der Herstellung des Spritzgußteils eingespritzt werden.

Alternativ ist es auch möglich, das Drahtelement an der Airbageinheit bzw. dem Lenkrad zu verrasten.

Es ist zweckmäßig, daß als Drahtelement ein Federstahl, vorzugsweise mit einem Durchmesser im Bereich von 1 bis 5 mm, eingesetzt wird. Der Federstahl gewährleistet einerseits die zur Verrastung erwünschte Flexibilität und weist andererseits die für die Funktion als Kontakt benötigte Leitfähigkeit auf. Auch die Verwendung von Draht aus anderen Metallen und Legierungen mit geeigneten Materialeigenschaften ist möglich.

Die Verrastung von Lenkrad und Airbageinheit erfolgt vorzugsweise dadurch, daß das an einem der beiden Teile festgelegte Drahtelement bügelförmige Abschnitte aufweist, denen hakenförmige Rastelemente an dem anderen Teil zugeordnet sind. Die Airbageinheit wird auf das Lenkrad aufgesetzt und bei einem Andrücken entgegen der von den Distanzelementen ausgeübten Kraft werden die bügelförmigen Abschnitte aus ihrer normalen Lage ausgelenkt, so daß sie an den hakenförmigen Rastelementen vorbei gleiten können. Bei Erreichen der Arretierstellung schnappen die bügelförmigen Abschnitte in die zugeordneten hakenförmigen Rastelemente ein und befinden sich dann wieder in ihrer normalen Lage.

Die zwischen der Airbageinheit und dem Lenkrad vorgesehenen Distanzelemente und die zur Verrastung erforderliche Auslenkung der bügelförmigen Abschnitte verhindern, daß die Rastverbindung sich durch eine weitere Annäherung von Airbageinheit und Lenkrad lösen kann. Bei Bedarf kann die Verbindung trotzdem durch eine Auslenkung der bügelförmigen Abschnitte mittels eines geeigneten Werkzeugs, wie beispielsweise eines Schraubendrehers, sehr einfach gelöst werden.

Vorzugsweise sind zwei und insbesondere drei bügelförmige Abschnitte mit zugeordneten hakenförmigen Rastelementen vorgesehen. Die Verwendung von drei Rastelementen erlaubt bei einer Anordnung zueinander unter geeigneten Winkeln eine Selbstzentrierung der Airbageinheit. Dadurch kann der Kontaktspalt besonders klein gehalten werden, was sowohl in ästhetischer Hinsicht als auch wegen der wesentlich verringerten Verschmutzungsgefahr wünschenswert ist.

In einer besonders bevorzugten Ausführungsform ist das an der Airbageinheit bzw. dem Lenkrad festgelegte Drahtelement ringförmig ausgebildet. Vorzugsweise weist es sich im wesentlichen senkrecht zu der von dem Drahtelement aufgespannten Ebene von der Airbageinheit in Richtung auf das Lenkrad bzw. von dem Lenkrad in Richtung auf die Airbageinheit erstreckende Bügel auf.

Die hakenförmigen Rastelemente weisen zweckmäßigerweise eine Abschrägung auf, an der die bügelförmigen Abschnitte des Drahtelementes bei der Verrastung der Airbageinheit mit dem Lenkrad zur Auslenkung geführt werden. Beispielsweise kann eine Rampe vorgesehen sein. Auch die Unterfläche des Hakens kann verschiedene Formen aufweisen. So ist es z. B. möglich, daß die Unterfläche glatt, abgeschrägt oder gewölbt ist.

Da das Drahtelement erfindungsgemäß gleichzeitig einen der Kontakte für die Hornauslösung bildet, ist es erforderlich, das Drahtelement gegenüber dem zweiten Kontakt zu isolieren. Als zweiten Kontakt ist im allgemeinen ein Kontaktniet vorgesehen. Der zweiten Kontakt kann je nach Aufbau vorzugsweise von einem Bauteil der Airbageinheit, z. B. dem Gasgenerator oder dessen Träger, oder dem Lenkradskelett gebildet werden. Üblicherweise ist das den zweiten Kontakt aufweisende Bauteil aus Metall und damit elektrisch leitend. Es ist aber genauso gut möglich, den Kontaktniet über ein Kabel anzuschließen.

Ist das den Kontakt bildende Rastelement an dem Lenkrad vorgesehen, dient zweckmäßigerweise der Boden eines Gehäuses der Airbageinheit, der Generatorträger oder der Gasgenerator, dessen Gehäuse üblicherweise metallisch ist, als zweiten Kontakt. Wenn das den Kontakt bildende Rastelement an der Airbageinheit vorgesehen ist, wird der zweiten Kontakt in der Regel von dem ohnehin metallischen Lenkradskelett gebildet.

Das Vorsehen einer zusätzlichen Kontaktbrücke ist erfindungsgemäß nicht erforderlich.

Zur Isolierung des den Kontakt bildenden Rastelementes gegenüber dem zweiten Kontakt wird dieses in den Bereichen, in denen es an dem den Gegenkontakt bildenden Teil in der Ruheposition anliegt, isoliert. Bei der bevorzugten Verwendung eines Drahtelementes als Kontakt eignen sich zur Isolierung beispielsweise Kunststoffbuchsen in Form von Clipselementen, Schrumpfschlauchelemente oder eine Tauchlackbeschichtung. Der elektrische Anschluß des den Kontakt bildenden Rastelementes kann bevorzugt über eine Steckerfahne erfolgen.

Die Verwendung von Kunststoffbuchsen oder Schrumpfschlauch als Isolierelemente hat den Vorteil, daß diese zugleich als Dämpfungselemente für mögliche Betätigungsgeräusche wirken.

Die Distanzelemente gewährleisten einerseits eine sichere Verrastung der Airbageinheit mit dem Lenkrad. Andererseits dienen sie zur Einstellung des benötigten Abstands, d. h. des Kontaktspaltes, zwischen Airbageinheit und Lenkrad in der Ruhelage. Die Kraft, die die Distanzelemente der Bewegung der Airbageinheit auf das Lenkrad zu entgegensetzen, bestimmt sich so, daß die zur Hornauslösung erforderliche Gegenkraft nicht zu groß ist, ohne daß durch Erschütterungen oder unbeabsichtigte Berührungen das Hornsignal versehentlich ausgelöst wird. Als Distanzelemente sind bevorzugt Schraubenfedern vorgesehen. Es eignen sich auch Kunststoffteile mit einer entsprechenden Elastizität.

Zur Sicherung gegen ein seitliches Verschieben der Airbageinheit gegenüber dem Lenkrad sind vorzugsweise Zentrierelemente vorgesehen. Hierfür eignen sich besonders Stifte an einem der Teile, die in entsprechende Vertiefungen an dem anderen Teil eingreifen. In einer bevorzugten Ausführungsform sind die Stifte als Zentrierelemente innerhalb der als Distanzelemente dienenden Schraubenfedern angeordnet.

Die Erfindung soll im folgenden anhand eines bevorzugten Ausführungsbeispiels weiter veranschaulicht werden.

Es zeigen:
- Figur 1:: einen Generatorträger einer Airbageinheit mit einem Rastelement zur Schaffung einer Rastverbindung mit einem Lenkrad in Explosionsdarstellung;
- Figur 2:: eine Detailansicht einer Rastverbindung vor (2a), während (2b) und nach (2c) der Verrastung;
- Figur 3:: eine Detailansicht eines Kontaktbereiches der Rastverbindung in der Draufsicht und im Schnitt;
- Figur 4:: eine Draufsicht auf den Generatorträger aus Fig. 1 mit eingelegtem Rastelement;
- Figur 5:: eine Detailansicht eines elektrischen Anschlusses des Rastelementes;
- Figur 6:: eine schematische Darstellung eines Schaltkreises eines elektrischen Horns mit einem Rastelement als Kontakt;
- Figur 7:: einen Schnitt durch ein Lenkrad mit einer mittels einer erfindungsgemäßen Rastverbindung daran befestigten Airbageinheit.

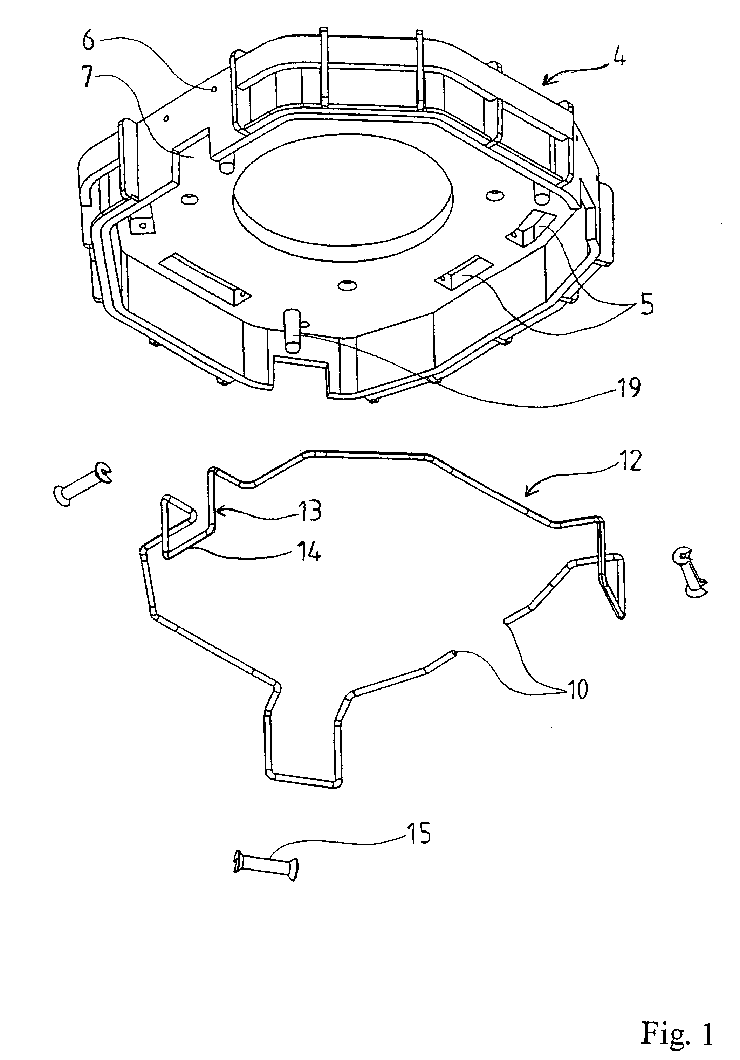

Figur 1 zeigt in einer Explosionsdarstellung einen Generatorträger 4 einer Airbageinheit, ein Rastelement in Form eines Drahtelementes (Federdrahtes) 12, das zugleich einen ersten Kontakt 8 der Kontakteinrichtung für die Hornauslösung bildet, und Kunststoffbuchsen als Isolierelemente 15.

Der Generatorträger 4 ist im Spritzgußverfahren aus Kunststoff hergestellt und bildet zugleich den Boden eines hier nicht gezeigten Gehäuses der Airbageinheit 3. Der Generatorträger 4 weist Öffnungen 6 für das Drahtelement 12 und Ausnehmungen 7 für hier nicht dargestellte Rasthaken eines Lenkradkörpers 30 auf, der mit dem Generatorträger 4 verrastet werden soll. Desweiteren sind zur Schaffung von Kontaktbereichen Aussparungen 5 vorgesehen.

Das zur Veranschaulichung separat dargestellte Drahtelement 12 ist in seiner Form im wesentlichen dem Umfang des Generatorträgers 4 angepaßt. Es weist elektrische Anschlüsse 10 und bügelförmige Abschnitte 13 auf. Bei der Herstellung des Generatorträgers wird das Drahtelement 12 in den Generatorträger eingespritzt. Die bügelförmigen Abschnitte 13 des Drahtelementes 12 ragen dann aus den Öffnungen 6 des Trägers 4 heraus. Das Drahtelement 12 ist ferner in den Aussparungen 5 zugänglich.

Vor der Verrastung des Generatorträgers 4 an einem Lenkradkörper werden Isolierelemente 15 auf den unteren Bereich 14 der bügelförmigen Abschnitte 13 des Drahtelementes 12 aufgesteckt. Die Isolierelemente 15 dienen gleichzeitig als Geräuschdämpfungselemente, um eventuell durch die Betätigung des Hornes oder bei Erschütterungen des Kraftfahrzeuges auftretende Geräusche zu verhindern.

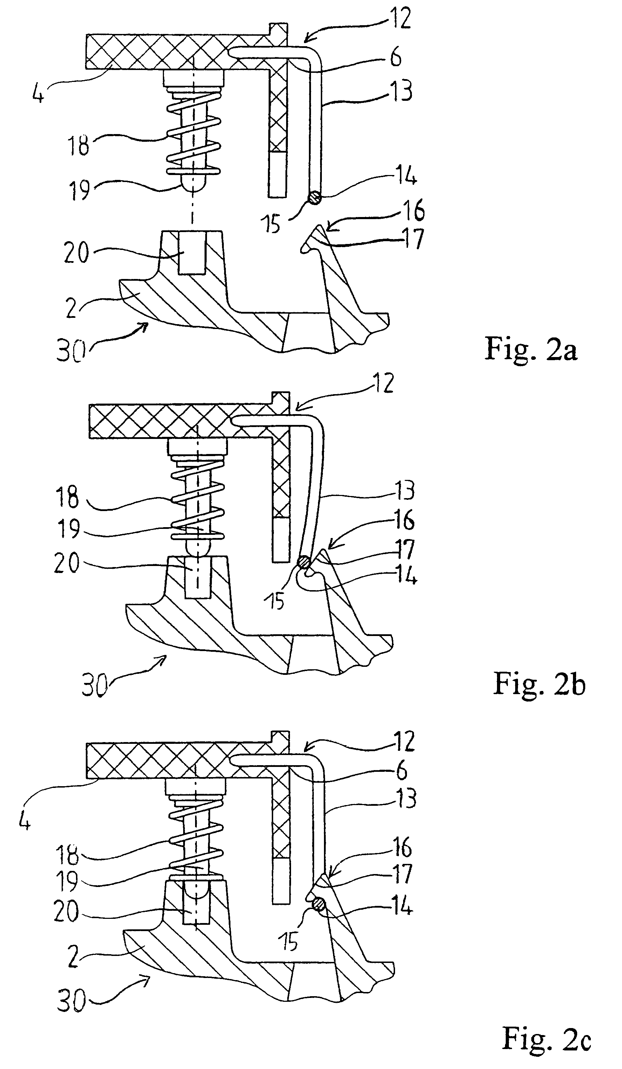

In Figur 2 ist ein Schnitt durch eine Rastverbindung zwischen dem in Figur 1 gezeigten Generatorträger 4 und einem Lenkradkörper 30 vor (a), während (b) und nach der Verrastung (c) im Detail dargestellt. Man erkennt einen Abschnitt des Skelettes 2 des Lenkrades 1 mit einer Vertiefung 20 und einem Rasthaken 16. Der Rasthaken 16 weist eine Schräge 17 zur Führung des bügelförmigen Abschnitts 13 des Drahtelementes 12 bei der Verrastung auf. Ferner ist ein Schrumpfschlauch als Isolierelement 15 erkennbar, das auf den unteren Bereich 14 des bügelförmigen Abschnittes 13 als Schicht aufgetragen ist.

In den Generatorträger 4 der Airbageinheit ist das Drahtelement 12 eingespritzt. Die bügelförmigen Abschnitte 13 des Drahtelementes 12 ragen aus den Öffnungen 6 des Generatorträgers 4 heraus. Sie erstrecken sich im wesentlichen senkrecht zu der Ebene des Drahtelementes 12, die der Fläche des Generatorträgers 4 entspricht, hin zu dem Lenkradkörper 30.

An dem Generatorträger 4 der Airbageinheit sind zur Sicherung gegen ein seitliches Verschieben der Airbageinheit gegenüber dem Lenkradkörper 30 ferner Stifte 19 als Zentrierelemente den Vertiefungen 20 in dem Lenkradskelett 2 zugeordnet. Das Lenkradskelett 2 ist Teil des Lenkradkörpers 30. Spiralfedern 18 sind um die Stifte 19 herum angeordnet und dienen als Distanzelemente zur Einstellung des Abstandes zwischen der Airbageinheit und dem Lenkrad 1.

Zur Verrastung wird die Airbageinheit in einer Position, die durch die Bügel 13 und die Zentrierelemente 19, 20 bestimmt wird, auf den Lenkradkörper 30 aufgesetzt. Dadurch kommen die unteren Bereiche 14 der bügelförmigen Abschnitte 13 des Drahtelementes 12 mit den Schrägen 17 der Rasthaken 16 in Kontakt. Beim weiteren Andrücken gleiten die unteren Bereiche 14 der Bügel 13 an der Schräge 17 entlang und werden dabei ausgelenkt. Gleichzeitig greifen die Stifte 19 in die Vertiefungen 20 ein und die Spiralfedern 18 werden um die Vertiefungen 20 herum auf dem Lenkradskelett 2 aufgesetzt.

Sobald die Airbageinheit 3 sich dem Lenkradkörper 30 bis auf den in Figur 2c gezeigten vorbestimmten Abstand genähert hat, können die unteren Bereiche 14 der bügelförmigen Abschnitte 13 des Drahtelementes 12 hinter den Rasthaken 16 einschnappen. Die Verwendung von Federstahl für das Drahtelement 12 erlaubt es dabei, die erfindungsgemäße Anordnung zur Verrastung nahezu beliebig oft wieder zu lösen und erneut einzurasten. Zur Lösung der Rastverbindung müssen lediglich die bügelförmigen Abschnitte 13 durch eine entsprechende Öffnung hindurch mit einem Handwerkzeug aus ihrer normalen Lage ausgelenkt werden. Die Airbageinheit 3 läßt sich dann von dem Lenkradkörper 30 abnehmen.

Die Spiralfedern 18 stehen in der Ruhelage unter einer gewissen Vorspannung und setzen damit der weiteren Annäherung der Airbageinheit 3 an den Lenkradkörper 30 eine definierte Kraft entgegen. Dadurch ist einerseits die Rastverbindung gegen ein unbeabsichtigtes Lösen zusätzlich gesichert. Andererseits kann durch einen Druck auf die Airbageinheit 3 die Kraft überwunden, der an der Airbageinheit 3 angeordnete elektrische erste Kontakt mit einem zugehörigen zweiten Kontakt an dem Lenkradkörper 30 kurzgeschlossen und so das elektrische Horn des Fahrzeugs ausgelöst werden.

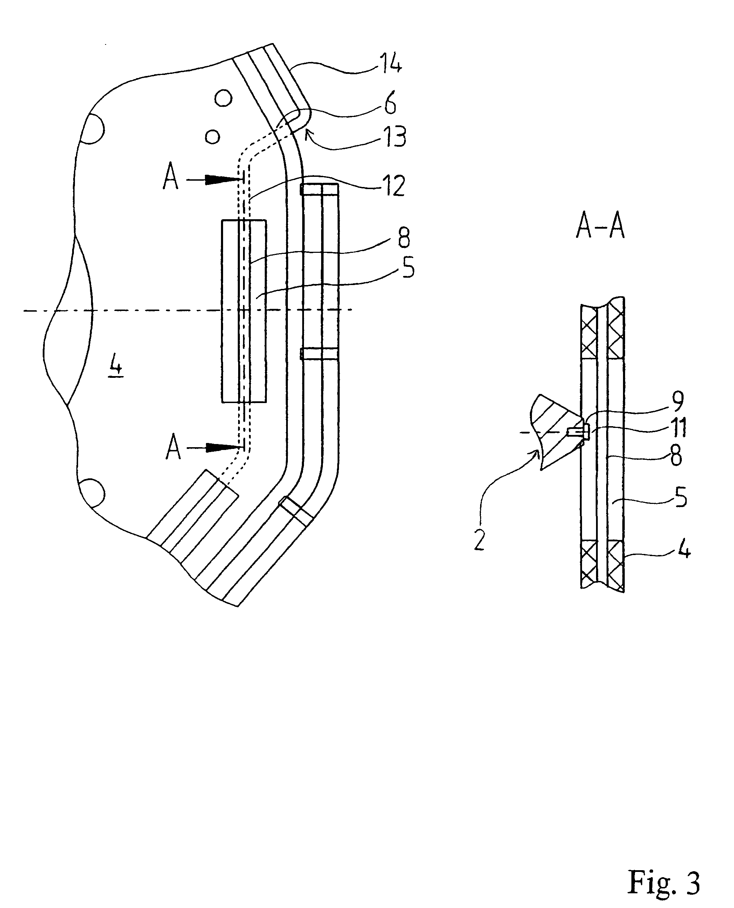

In der Figur 3 ist eine Draufsicht auf den Kontaktbereich der Airbageinheit dargestellt. Man erkennt einen Teil des Generatorträgers 4 mit dem eingelegten Drahtelement 12 und eine Aussparung 5 in der Fläche des Generatorträgers 4. In dieser Aussparung 5 ist das Drahtelement 12 zugänglich und nicht elektrisch isoliert. Das Drahtelement 12 bildet erfindungsgemäß einen ersten Kontakt 8 für die Hornauslösung.

In dem Schnitt entlang der Linie A-A ist zusätzlich ein Teil des Lenkradskelettes 2 gezeigt. Ein an dem elektrisch leitenden Lenkradskelett 2 befestigter Kontaktniet ist als zweiter Kontakt 9 vorgesehen. Weiter ist erkennbar, daß der Kontaktspalt 11 zwischen dem ersten Kontakt 8 und dem zweiten Kontakt 9 und damit der Abstand zwischen Airbageinheit 3 und Lenkradkörper 30 in der Ruheposition sehr gering gehalten werden kann.

Alternativ zu dem elektrisch leitenden Lenkradskelett 2 kann der Kontakniet auch über Kabel angeschlossen werden, beispielsweise wenn das Lenkradskelett 2 nicht aus leitfähigem Material hergestellt werden soll. In diesem Fall erübrigt sich natürlich eine elektrische Isolierung des Drahtelementes 12.

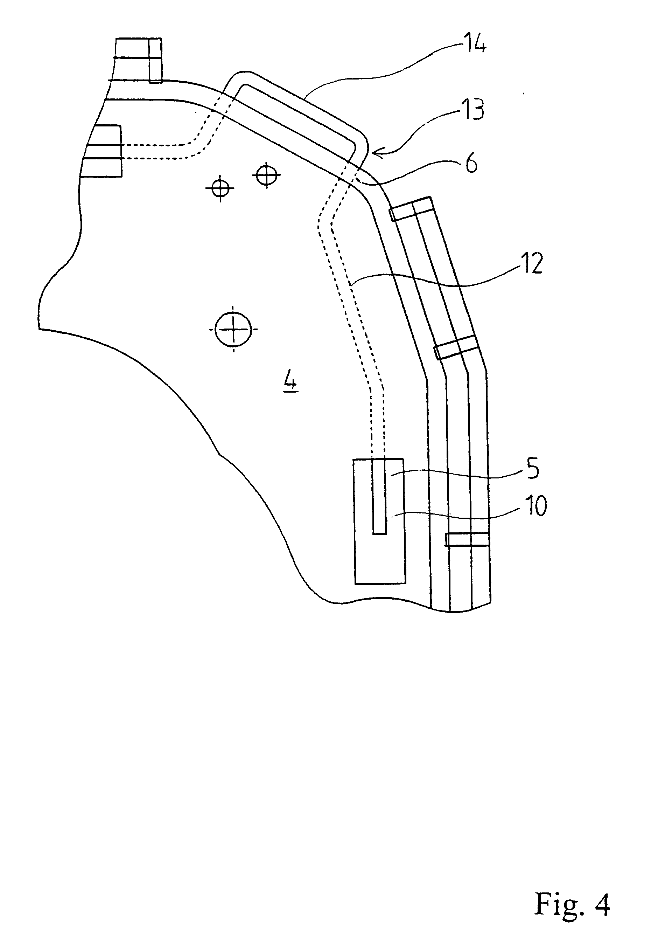

Figur 4 zeigt eine Draufsicht auf den Generatorträger 4 der Airbageinheit im Bereich eines elektrischen Anschlusses 10 des Drahtelementes 12. Der Anschluss 10 ist in einer Aussparung 5 angeordnet, so daß hier eine elektrische Kontaktierung über eine Steckerfahne möglich ist.

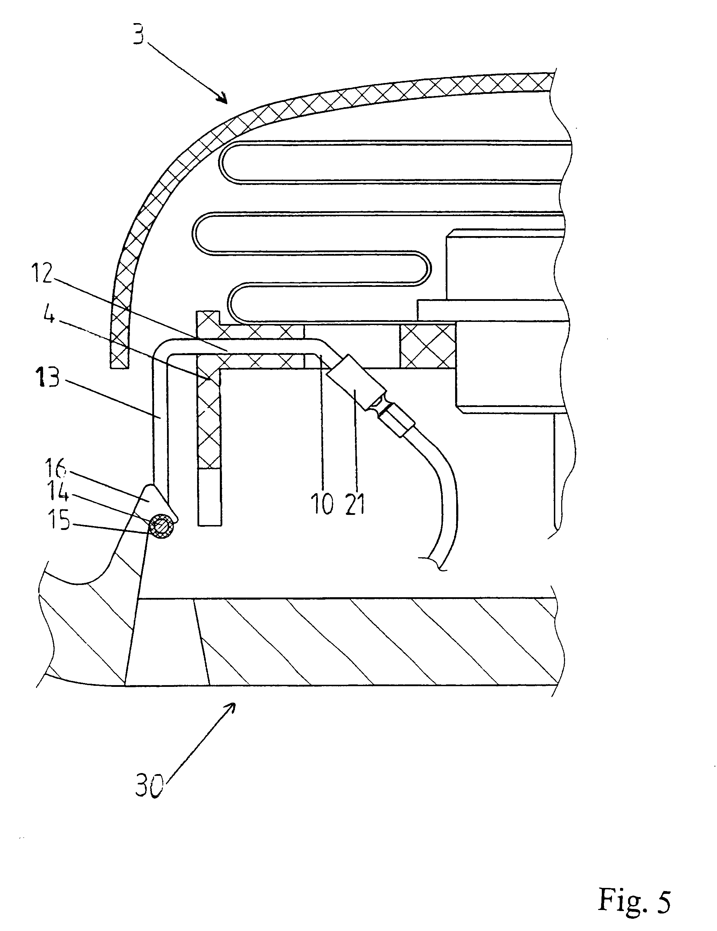

Figur 5 zeigt eine Detailansicht des elektrischen Anschlusses des Drahtelementes 12. Man erkennt den an dem Rasthaken 16 gehaltenen bügelförmigen Abschnitt 13 des Drahtelementes 12, der in seinem unteren Bereich 14 mit einem Isolierelement 15 gegenüber dem Rasthaken 16 elektrisch isoliert ist. In der Aussparung 5 des Generatorträgers 4 ist das Drahtelement 12 mittels einer Steckerfahne 21 an den elektrischen Schaltkreis des hier nicht mit dargestellten Hornes angeschlossen.

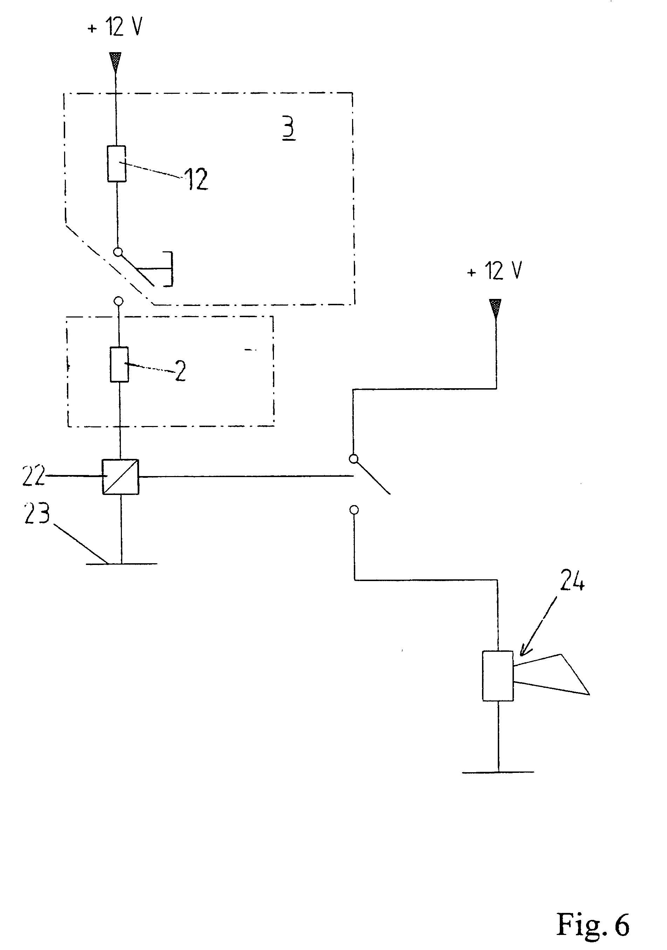

In Figur 6 ist eine Schaltskizze des elektrischen Hornes dargestellt. Der erste Kontakt 8 wird von dem Drahtelement 12, hier als Widerstand symbolisiert, gebildet. Der zweiten Kontakt 9 wird von einem Kontaktniet gebildet, der mit dem aus Metall bestehenden Lenkradskelett 2 des Lenkradkörpers 30 verbunden ist. Ein mit der Fahrzeugmasse 23 gekoppeltes Schaltrelais 22 stellt den Kontakt zum Horn 24 her. Durch eine Betätigung der Airbageinheit 3 wird der erste Kontakt 8 mit dem zweiten Kontakt 9 kurzgeschlossen und so über das Schaltrelais 22 das Horn ausgelöst.

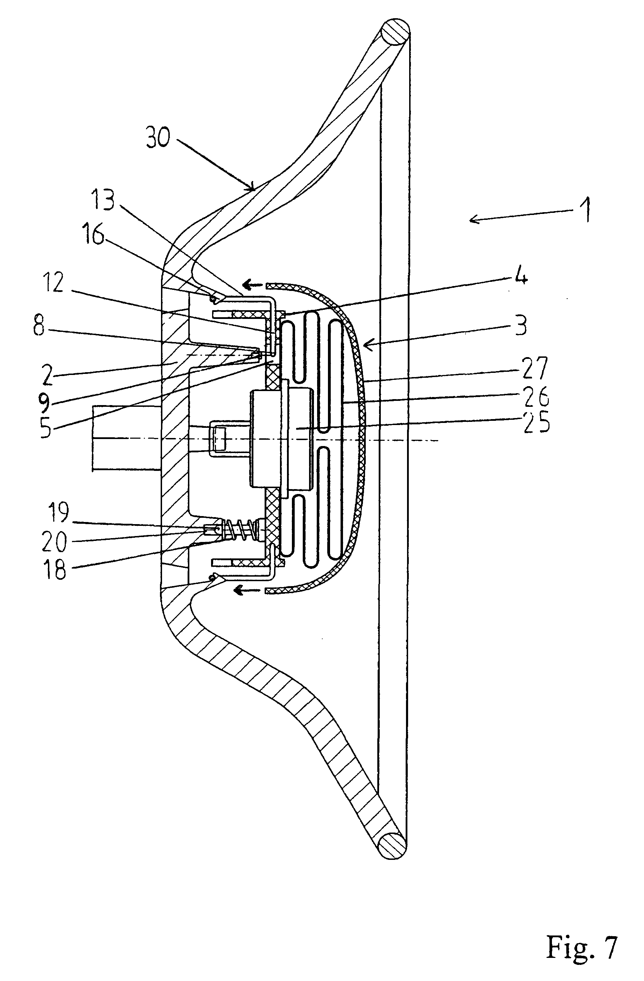

Figur 7 zeigt einen Schnitt durch eine mittels einer erfindungsgemäßes Lenkrad 1 mit einer an dem Lenkradkörper 30 verrasteten Airbageinheit 3. Die Airbageinheit 3 umfaßt den Generatorträger 4 mit dem daran befestigten Gasgenerator 25, dem Gassack 26 und der Abdeckung 27. In dem Generatorträger 4 sind die Drahtelemente 12 erkennbar. Über deren bügelförmige Abschnitte 13 ist die Airbageinheit 3 an den Rasthaken 16 mit dem Lenkradkörper 30 verrastet. Im Bereich der Aussparungen 5 ist dem Drahtelement 12 als erstem Kontakt 8 ein Kontaktniet als zweitem Kontakt 9 zugeordnet. Der Abstand zwischen der Airbageinheit 3 und dem Lenkradkörper 30 wird durch Schraubenfedern als Distanzelemente 18 festgelegt. Innerhalb der Schraubenfedern 18 sind Stifte 19 angeordnet, die in Vertiefungen 20 an dem Lenkradkörper 30 eingreifen und so ein seitliches Verschieben der Airbageinheit 3 gegenüber dem Lenkradkörper 30 verhindern.

Durch Ausübung von Druck auf die Abdeckung 27 der Airbageinheit 3 wird die Airbageinheit 3 in Pfeilrichtung entgegen der von den Schraubenfedern 18 ausgeübten Kraft auf den Lenkradkörper 30 zubewegt. Dabei berührt der erste Kontakt 8 den zweiten Kontakt 9 und das Horn (hier nicht gezeigt) ertönt. Sobald der Fahrzeuglenker den Druck auf die Abdeckung 27 der Airbageinheit 3 entsprechend verringert, bringen die Schraubenfedern 18 die Airbageinheit 3 in die Ruheposition zurück und der Hupenkontakt wird wieder unterbrochen.

Mit der erfindungsgemäßen Anordnung zur Verrastung ist eine einfache und ohne Werkzeug durchführbare Montage einer Airbageinheit an einem Lenkradkörper möglich. Durch die Doppelfunktion eines der Rastelemente, das zugleich einen Kontakt für die Hornauslösung bildet, kann die Teilezahl verringert und der Aufwand für die Positionierung von Rastelement und Kontakteinrichtung reduziert werden.

Durch die erfindungsgemäße Anordnung kann weiterhin der Kontaktspalt zwischen den Kontakten des Horns verringert und damit der ästhetische Eindruck verbessert werden.

Selbstverständlich können anstelle eines umlaufenden Drahtelementes in Form eines Ringes gegebenenfalls auch mehrere separate Rastabschnitte eingesetzt werden. Auf diese Weise können unterschiedliche Kontakte durch einen Druck auf getrennte Bereiche der Airbageinheit schließbar sein, so daß neben der Hornauslösung weitere bzw. andere Funktionen realisierbar sind.

Desweiteren kann die Verrastung einer Airbageinheit an einem Fahrzeugteil über Drahtbügel auch bei Beifahrer- und Seitenairbags vorteilhaft eingesetzt werden. Hierbei kann entweder der elektrische Kontakt ganz fehlen oder für andere elektrische Funktionen verwendet werden.

### Bezugszeichenliste

- 1.: Lenkrad
- 2.: Lenkradskelett
- 3.: Airbageinheit
- 4.: Generatorträger
- 5.: Aussparungen
- 6.: Öffnungen
- 7.: Ausnehmungen
- 8.: erster Kontakt
- 9.: zweiter Kontakt
- 10.: Anschluß
- 11.: Kontaktspalt
- 12.: Drahtelement
- 13.: bügelförmiger Abschnitt
- 14.: unterer Bereich des Bügels
- 15.: Isolierelement
- 16.: Rasthaken
- 17.: Schräge
- 18.: Spiralfeder
- 19.: Stift
- 20.: Vertiefung
- 21.: Steckerfahne
- 22.: Schaltrelais
- 23.: Fahrzeugmasse
- 24.: Horn
- 25.: Gasgenerator
- 26.: Gassack
- 27.: Abdeckung
- 30.: Lenkradkörper

## Patentansprüche

1. Lenkrad mit
- einem Lenkradkörper (30),
- einer Airbageinheit (3),
- einer Rastverbindung zum Festlegen der Airbageinheit (3) an dem Lenkradkörper (30), und
- einer Kontakteinrichtung mit mindestens einem ersten und mindestens einem zweiten Kontakt (8, 9), die zur Auslösung eines elektrischen Funktionselementes, insbesondere eines elektrischen Hornes (24), kurzgeschlossen werden, wenn die Airbageinheit (3) durch einen auf die Airbageinheit (3) ausgeübten Druck in Richtung des Lenkradkörpers (30) bewegt wird,
wobei der mindestens eine erste Kontakt (8) ein Bestandteil mindestens eines Rastelementes (12) der Rastverbindung ist,
**dadurch gekennzeichnet,**
**daß** das Rastelement (12) durch ein Drahtelement gebildet wird.

2. Lenkrad nach Anspruch 1, **dadurch gekennzeichnet, daß** mindestens ein elastisches Distanzelement (18) zur Einstellung eines Abstandes zwischen dem Lenkradkörper (30) und der Airbageinheit (3) vorgesehen ist, das durch Ausübung eines Druckes auf die Airbageinheit (3) deformierbar ist.

3. Lenkrad nach Anspruch 2, **dadurch gekennzeichnet, daß** das Distanzelement (18) durch ein von dem Rastele ment (12) separates Bauelement gebildet wird.

4. Lenkrad nach einem der vorhergehenden Ansprüche, **dadurch gekennzeichnet, daß** sich das Rastelement (12) zumindest teilweise entlang des Umfangs der Airbageinheit (3) erstreckt.

5. Lenkrad nach einem der vorhergehenden Ansprüche, **dadurch gekennzeichnet, daß** das Rastelement (12) mindestens einen bügelförmigen Abschnitt (13) aufweist, dem zur Verrastung ein Rasthaken (16) zugeordnet ist.

6. Lenkrad nach Anspruch 4 und 5, **dadurch gekennzeichnet, daß** das Rastelement (12) ringförmig ausgebildet ist und der bügelförmige Abschnitt (13) sich im wesentlichen senkrecht zu der von dem Rastelement (12) aufgespannten Ebene erstreckt.

7. Lenkrad nach einem der vorhergehenden Ansprüche, **dadurch gekennzeichnet, daß** das Rastelement (12) zumindest an den Stellen, an denen es in der Ruheposition an einem mit dem zweiten Kontakt (9) leitend verbundenen Teil (1) anliegt, elektrisch isoliert ist.

8. Lenkrad nach einem der vorhergehenden Ansprüche, **dadurch gekennzeichnet, daß** der zweite Kontakt (9) in elektrisch leitender Verbindung mit dem Skelett (2) des Lenkrades (1) steht.

9. Lenkrad nach Anspruch 7 oder 8, **dadurch gekennzeichnet, daß** das Rastelement (12) durch ein Clipselement (15), einen Schrumpfschlauch oder eine Tauchlackbeschichtung isoliert ist.

10. Lenkrad nach einem der vorhergehenden Ansprüche, **dadurch gekennzeichnet, daß** als zweiter Kontakt (9) ein Kontaktniet vorgesehen ist.

11. Lenkrad nach einem der vorhergehenden Ansprüche, **dadurch gekennzeichnet, daß** der erste Kontakt (8) an der Airbageinheit (3) und der zweite Kontakt (9) an dem Lenkradkörper (30) angeordnet ist.

12. Lenkrad nach einem der vorhergehenden Ansprüche, **dadurch gekennzeichnet, daß** das Rastelement (12) in die Airbageinheit (3) oder das Lenkradskelett (2) eingebettet ist, und daß zur Ausbildung des ersten Kontaktes (8) des Rastelementes (12) eine Aussparung (5) in der Airbageinheit (3) oder dem Lenkradskelett (2) vorgesehen ist, durch die hindurch das Rastelement (12) zugänglich ist.

13. Lenkrad nach einem der vorhergehenden Ansprüche, **dadurch gekennzeichnet, daß** das Distanzelement (18) derart vorgespannt ist, daß die Spannkräfte dem Lösen der Rastverbindung entgegenwirken.

14. Lenkrad nach einem der vorhergehenden Ansprüche, **dadurch gekennzeichnet, daß** eine Schraubenfeder das Distanzelement (18) bildet.

15. Lenkrad nach einem der vorhergehenden Ansprüche, **dadurch gekennzeichnet, daß** das Rastelement (12) nicht vorgespannt ist.

16. Lenkrad nach einem der vorhergehenden Ansprüche, **dadurch gekennzeichnet, daß** Zentrierelemente (19, 20) zur Sicherung gegen ein seitliches Verschieben der Airbageinheit (3) gegenüber dem Lenkradkörper (30) vorgesehen sind.

17. Lenkrad nach Anspruch 16, **dadurch gekennzeichnet, daß** das Distanzelement (18) auf ein Zentrierelement (19, 20) aufgesteckt ist.

## Claims

1. A steering wheel having
- a steering wheel body (30),
- an airbag unit (3),
- a latching connection for securing the airbag unit (3) to the steering wheel body (30), and
- a contact device having at least one first and at least one second contact (8, 9) which, in order to trigger an electric functional element, in particular an electric horn (24), are short-circuited if the airbag unit (3) is moved in the direction of the steering wheel body (30) by a pressure exerted on the airbag unit (3),
the at least one first contact (8) being a component of at least one latching element (12) of the latching connection,
**characterized**
**in that** the latching element (12) is formed by a wire element.

2. The steering wheel as claimed in claim 1, **characterized in that** at least one elastic spacer element (18) for setting a distance between the steering wheel body (30) and the airbag unit (3) is provided, which element can be deformed by a pressure being exerted on the airbag unit (3).

3. The steering wheel as claimed in claim 2, **characterized in that** the spacer element (18) is formed by a structural element separate from the latching element (12).

4. The steering wheel as claimed in one of the preceding claims, **characterized in that** the latching element (12) extends at least partially along the circumference of the airbag unit (3).

5. The steering wheel as claimed in one of the preceding claims, **characterized in that** the latching element (12) has at least one bow-shaped section (13) which, for latching purposes, is assigned a latching hook (16).

6. The steering wheel as claimed in claim 4 and 5, **characterized in that** the latching element (12) is of annular design and the bow-shaped section (13) extends essentially perpendicular with respect to the plane clamped by the latching element (12).

7. The steering wheel as claimed in one of the preceding claims, **characterized in that** the latching element (12) is electrically insulated at least at the points at which it bears in the inoperative position against a part (1) conductively connected to the second contact (9).

8. The steering wheel as claimed in one of the preceding claims, **characterized in that** the second contact (9) is electrically conductively connected to the frame (2) of the steering wheel (1).

9. The steering wheel as claimed in claim 7 or 8, **characterized in that** the latching element (12) is insulated by a clip element (15), a shrinkable tubing or a coating of dipping paint.

10. The steering wheel as claimed in one of the preceding claims, **characterized in that** a contact rivet is provided as the second contact (9).

11. The steering wheel as claimed in one of the preceding claims, **characterized in that** the first contact (8) is arranged on the airbag unit (3) and the second contact (9) is arranged on the steering wheel body (30).

12. The steering wheel as claimed in one of the preceding claims, **characterized in that** the latching element (12) is embedded in the airbag unit (3) or in the steering wheel frame (2), and **in that** in order to form the first contact (8) of the latching element (12) a cutout (5) is provided in the airbag unit (3) or in the steering wheel frame (2) and the latching element (12) is accessible through said cutout.

13. The steering wheel as claimed in one of the preceding claims, **characterized in that** the spacer element (18) is pretensioned in such a manner that the tension forces counteract the release of the latching connection.

14. The steering wheel as claimed in one of the preceding claims, **characterized in that** a helical spring forms the spacer element (18).

15. The steering wheel as claimed in one of the preceding claims, **characterized in that** the latching element (12) is not pretensioned.

16. The steering wheel as claimed in one of the preceding claims, **characterized in that** centering elements (19, 20) for securing against a lateral displacement of the airbag unit (3) with respect to the steering wheel body (30) are provided.

17. The steering wheel as claimed in claim 16, **characterized in that** the spacer element (18) is plugged onto a centering element (19, 20).

## Revendications

1. Volant de direction comportant
- un corps de volant (30),
- un ensemble d'airbag (3),
- une liaison à enclenchement pour immobiliser l'ensemble d'airbag (3) sur le corps de volant (30), et
- un dispositif de mise en contact comportant au moins un premier contact et au moins un deuxième contact (8, 9) qui sont court-circuités pour déclencher un élément fonctionnel électrique, en particulier un avertisseur sonore électrique (24), lorsque l'ensemble d'airbag (3) est déplacé en direction du corps de volant (30) par une pression exercée sur l'ensemble d'airbag (3),
ledit au moins un premier contact (8) faisant partie d'au moins un élément d'enclenchement (12) de la liaison à enclenchement,
**caractérisé en ce que**
l'élément d'enclenchement (12) est formé par un élément en fil métallique.

2. Volant selon la revendication 1, **caractérisé en ce qu'**il est prévu au moins un élément écarteur élastique (18) pour régler une distance entre le corps de volant (30) et l'ensemble d'airbag (3), qui est déformable par exercice d'une pression sur l'ensemble d'airbag (3).

3. Volant selon la revendication 2, **caractérisé en ce que** l'élément écarteur (18) est formé par un composant séparé de l'élément d'enclenchement (12).

4. Volant selon l'une des revendications précédentes, **caractérisé en ce que** l'élément d'enclenchement (12) s'étend au moins partiellement le long de la périphérie de l'ensemble d'airbag (3).

5. Volant selon l'une des revendications précédentes, **caractérisé en ce que** l'élément d'enclenchement (12) comprend au moins un tronçon (13) en forme d'arceau auquel est associé, pour l'enclenchement, un crochet d'enclenchement (16).

6. Volant selon les revendications 4 et 5, **caractérisé en ce que** l'élément d'enclenchement (12) est réalisé en forme annulaire et le tronçon (13) en forme d'arceau s'étend sensiblement perpendiculairement au plan défini par l'élément d'enclenchement (12).

7. Volant selon l'une des revendications précédentes, **caractérisé en ce que** l'élément d'enclenchement (12) est électriquement isolé au moins aux endroits auxquels il s'appuie contre une partie (1) connectée de façon conductrice au deuxième contact (9) dans la position de repos.

8. Volant selon l'une des revendications précédentes, **caractérisé en ce que** le deuxième contact (9) est en liaison conductrice de l'électricité avec l'ossature (2) du volant (1).

9. Volant selon la revendication 7 ou 8, **caractérisé en ce que** l'élément d'enclenchement (12) est isolé par un élément d'encliquetage (15), par un tube rétractable ou par un revêtement de vernis au trempé.

10. Volant selon l'une des revendications précédentes, **caractérisé en ce qu'**il est prévu un rivet de contact en tant que deuxième contact (9).

11. Volant selon l'une des revendications précédentes, **caractérisé en ce que** le premier contact (8) est agencé sur l'ensemble d'airbag (3) et le deuxième contact (9) est agencé sur le corps de volant (30).

12. Volant selon l'une des revendications précédentes, **caractérisé en ce que** l'élément d'enclenchement (12) est noyé dans l'ensemble d'airbag (3) ou dans l'ossature de volant (2), et **en ce que**, pour réaliser le premier contact (8) de l'élément d'enclenchement (12), il est prévu une échancrure (5) dans l'ensemble d'airbag (3) ou dans l'ossature de volant (2) à travers laquelle l'élément d'enclenchement (12) est accessible.

13. Volant selon l'une des revendications précédentes, **caractérisé en ce que** l'élément écarteur (18) est précontraint de telle sorte que les forces de tension s'opposent au détachement de la liaison à enclenchement.

14. Volant selon l'une des revendications précédentes, **caractérisé en ce qu'**un ressort hélicoïdal forme l'élément écarteur (18).

15. Volant selon l'une des revendications précédentes, **caractérisé en ce que** l'élément d'enclenchement (12) n'est pas précontraint.

16. Volant selon l'une des revendications précédentes, **caractérisé en ce qu'**il est prévu des éléments de centrage (19, 20) pour le blocage à l'encontre d'une translation latérale de l'ensemble d'airbag (3) par rapport au corps de volant (30).

17. Volant selon la revendication 16, **caractérisé en ce que** l'élément écarteur (18) est enfiché sur un élément de centrage (19, 20).
